# EUROPEAN PATENT APPLICATION

(11) **EP 4 664 807 A1**
(43) Date of publication of application: **17.12.2025**
(21) Application number: 23920549.5
(22) Date of filing: 10.02.2023
(51) Int. Cl.: H04L 5/00

(54) **COMMUNICATION METHOD, APPARATUS, DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/075535
(87) International publication number: WO 2024/164342

(57) **Abstract**

Embodiments of the present disclosure pertain to the technical field of communication and provide a communication method, an apparatus, a device, and a storage medium, applicable to a sensing initiating end. The method comprises: determining a first message frame, the first message frame comprising a first identification bit, where the first identification bit indicates, by means of a first value, that the feedback content of a sensing measurement report frame comprises a received signal strength indication (RSSI) of each receiving antenna of a sensing receiving end; and sending the first message frame. The embodiments of the present disclosure can provide a way to indicate feedback RSSI during the sensing measurement process.

## Description

### TECHNICAL FIELD

Examples of the present invention relate to the field of communication technologies. Specifically, the examples of the present invention relate to a communication method, a communication apparatus, a device, and a storage medium.

### BACKGROUND

In a sensing measurement procedure for a wireless local area network (WLAN), it occurs that per-receive (RX)-antenna received signal strength indicators (RSSIs) of a sensing receiver are fed back. However, feedback content of a sensing measurement report frame includes the per-RX-antenna RSSIs of the sensing receiver, whose indication needs to be clearly defined.

### SUMMARY

Examples of the present invention provide a communication method, a communication apparatus, a device, and a storage medium, which may provide a mechanism for indicating the feedback of per-RX-antenna RSSIs of a sensing receiver in a sensing measurement procedure.

In a first aspect, the examples of the present invention provide a communication method, which is applicable to a sensing initiator, and the method includes:
determining a first message frame that includes a first identification bit, wherein the first identification bit indicates through a first value that feedback content of a sensing measurement report frame includes per-receive (RX)-antenna signal strength indications (RSSIs) of a sensing receiver; and
transmitting the first message frame.

In a second aspect, the examples of the present invention provide a communication method, which is applicable to a sensing responder, and the method includes:
receiving a first message frame that includes a first identification bit, wherein the first identification bit indicates through a first value that feedback content of a sensing measurement report frame includes per-RX-antenna RSSIs of a sensing receiver.

In a third aspect, the examples of the present invention further provide a communication apparatus, and the apparatus includes:
a first determining unit, configured to determine a first message frame that includes a first identification bit, wherein the first identification bit indicates through a first value that feedback content of a sensing measurement report frame includes per-RX-antenna RSSIs of a sensing receiver; and
a first communicating unit, configured to transmit the first message frame.

In a fourth aspect, the examples of the present invention further provide a communication apparatus, and the apparatus includes:
a second communicating unit, configured to receive a first message frame that includes a first identification bit, wherein the first identification bit indicates through a first value that feedback content of a sensing measurement report frame includes per-RX-antenna RSSIs of a sensing receiver.

In a fifth aspect, the examples of the present invention further provide an electronic device, including one or more memories, one or more processors, and a computer program stored in the one or more memories and executable on the one or more processors. The one or more processors execute the program to implement any communication method provided in the examples of the present invention.

In a sixth aspect, the examples of the present invention further provide a computer-readable storage medium, on which a computer program is stored. The computer program, when executed by one or more processors, implements any communication method provided in the examples of the present invention.

The examples of the present invention provide a communication method, which enables a sensing initiator to indicate, through a first message frame, that per-RX-antenna RSSIs of a sensing receiver are carried in feedback content of a sensing measurement report frame.

For the additional aspects and advantages of the examples of the present invention, a part of them will be set forth in the following description, which will be apparent according to the following description or be learned through putting the present invention into practice.

### BRIEF DESCRIPTION OF THE DRAWINGS

The drawings used in the description of the examples of the present invention are briefly introduced below to explain the technical solutions provided in examples of the present invention more clearly. It is evident that, the drawings in the following description illustrate only some examples of the present invention, and based on these drawings, those of ordinary skill in the art may obtain other drawings without creative work.
FIG. 1 is a schematic architectural diagram of a WLA sensing measurement provided in an example of the present invention.
FIG. 2 is a schematic diagram of communication connections provided in an example of the present invention.
FIG. 3 is another schematic architectural diagram of a WLA sensing measurement provided in an example of the present invention.
FIG. 4 is a schematic diagram of interactions between a sensing initiator and a sensing responder provided in an example of the present invention.
FIG. 5 is a schematic flowchart of a communication method provided in an example of the present invention.
FIG. 6a is a schematic diagram of a first identification bit provided in an example of the present invention.
FIG. 6b is a schematic diagram of a first identification bit and a second identification bit provided in an example of the present invention.
FIG. 6c is another schematic diagram of a first identification bit and a second identification bit provided in an example of the present invention.
FIG. 7 is another schematic flowchart of a communication method provided in an example of the present invention.
FIG. 8 is a schematic structural diagram of a communication apparatus provided in an example of the present invention.
FIG. 9 is another schematic structural diagram of a communication apparatus provided in an example of the present invention.
FIG. 10 is a schematic structural diagram of an electronic device provided in an example of the present invention.

### DETAILED DESCRIPTION OF THE EMBODIMENTS

The term "and/or" in examples of the present invention describes association relationships between associated objects, indicating that there may be three types of relationships. For example, A and/or B means that A exists alone, A and B exist at the same time, and B exists alone. The character "/" generally indicates that the associated objects before and after are in an "or" relationship.

The term "plurality of" in the examples of the present invention refers to two or more than two, and other quantifiers are similar thereto.

The examples will be described in detail herein, with illustrations shown in the accompanying drawings. Where the following descriptions involve the drawings, like numerals in different drawings refer to like or similar elements unless otherwise indicated. The implementations described in the following examples do not represent all implementations consistent with the present invention. Rather, they are merely examples of apparatuses and methods consistent with some aspects of the present invention as detailed in the appended claims.

The terms used in the present invention are for the purpose of describing particular examples only, and are not intended to limit the present invention. Terms determined by "a," "said," and "the" in their singular forms in the present invention and the appended claims are also intended to include their plural forms, unless clearly indicated otherwise in the context. It is also understood that the term "and/or" as used herein is and includes any and all possible combinations of one or more of the associated listed items.

It is to be understood that, although terms "first," "second," "third," and the like may be used in the present invention to describe various information, such information should not be limited to these terms. These terms are only used to distinguish the information of the same type from each other. For example, without departing from the scope of the present invention, first information may be referred to as second information. Similarly, second information may also be referred to as first information. Depending on the context, the word "if" as used herein may be interpreted as "when," "upon," or "in response to determining."

For a sensing measurement report frame, it may include per-receive (RX)-antenna received signal strength indicator (RSSI) values of a sensing receiver. The RSSI value of each RX antenna may be indicated by an single octet.

In a wireless local access network (WLAN) sensing measurement, there is a feedback mechanism for channel state information (CSI), and the existing standards have clearly defined the feedback mechanism for the CSI. Particularly, if a sensing receiver is required to carry the CSI in feedback content of the sensing measurement report frame, a sensing initiator is to negotiate during a sensing measurement setup procedure. Specifically, an identification bit may be carried in a sensing measurement parameters element field to indicate that the feedback content of the sensing measurement report frame includes the CSI.

For example, the sensing measurement parameters element field includes a trigger-based (TB) specific subelement field (as shown in the following table). The TB specific subelement field includes a CSI variation threshold field, so as to indicate through the CSI variation threshold field that the feedback content of the sensing measurement report frame includes the CSI.

| | Subelement ID | Length | AID/USI D | Poll Assigned | CSI Variation Threshold | Reserved | Availability Window |
|---|---|---|---|---|---|---|---|
| Bits | 8 | 8 | 16 | 1 | 4 | 3 | 64 |

The following, in conjunction with the drawings of the examples of the present invention, will clearly and completely describe the technical solutions provided in the examples of the present invention. It is evident that the described examples are a part, but not all, of the examples of the present invention. Based on the examples provided in the present invention, all other examples, which can be obtained by those of ordinary skill in the art without creative work, shall fall within the protection scope of the present invention.

Particularly, the methods and the apparatuses are based on the same disclosed concept. For the methods and the apparatuses, their implementations can refer to each other since their principles of solving problems are similar, and their repeated parts are not repeated.

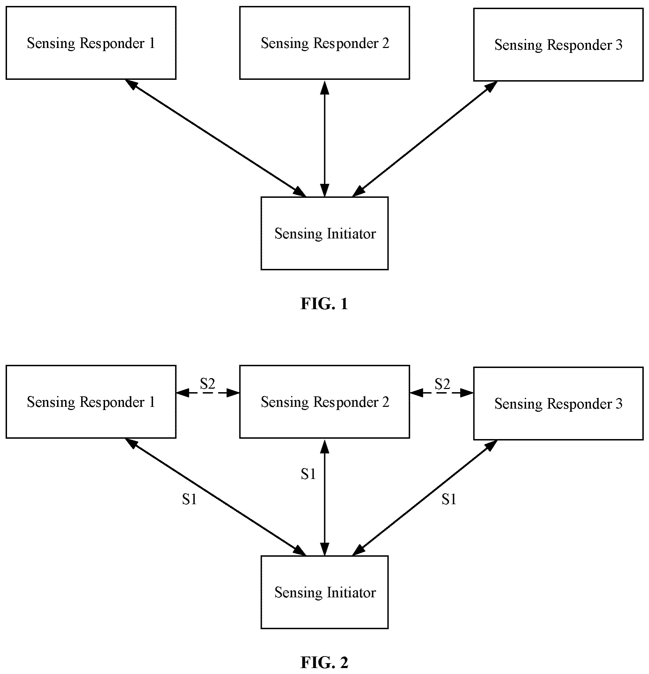

As a first example, referring to FIG. 1 to FIG. 3, WLAN sensing measurement architectures and WLAN sensing measurement procedures to which communication methods provided in the examples of the present invention are first introduced.

FIG. 1 illustrates a schematic architectural diagram of a WLA sensing measurement. A sensing initiator initiates the WLAN sensing measurement (e.g., initiates a WLAN sensing measurement session). There may be a plurality of sensing responders responding thereto, such as Responder 1, Responder 2, and Responder 3, as illustrated in FIG. 1. When the sensing initiator initiates the WLAN sensing measurement, the plurality of associated or unassociated sensing responders for the WLAN sensing measurement may perform the response.

Being "associated" herein may refer to an initial association link for communications that has been established between the sensing initiator and the sensing responder, and being "unassociated" may refer to no initial association link for communications that has been established between the sensing initiator and the sensing responder.

Referring to FIG. 2, the sensing initiator communicates with the sensing responders via communication links, as illustrated by communication links S1, and the sensing responders communicate with each other via communication links S2.

Particularly, each sensing initiator may be a client, and each sensing responder (i.e., Sensing Responder 1 to Sensing Responder 3 in the example) may be a station (STA) or an access point (AP).

Particularly, the AP is a wireless switch used in a wireless network or is an access device for the wireless network. The AP may include software applications and/or circuits to enable other types of nodes in the wireless network to communicate externally and internally to the wireless network through the AP. For example, the AP may be a terminal device or a network device equipped with a wireless fidelity (Wi-Fi) chip.

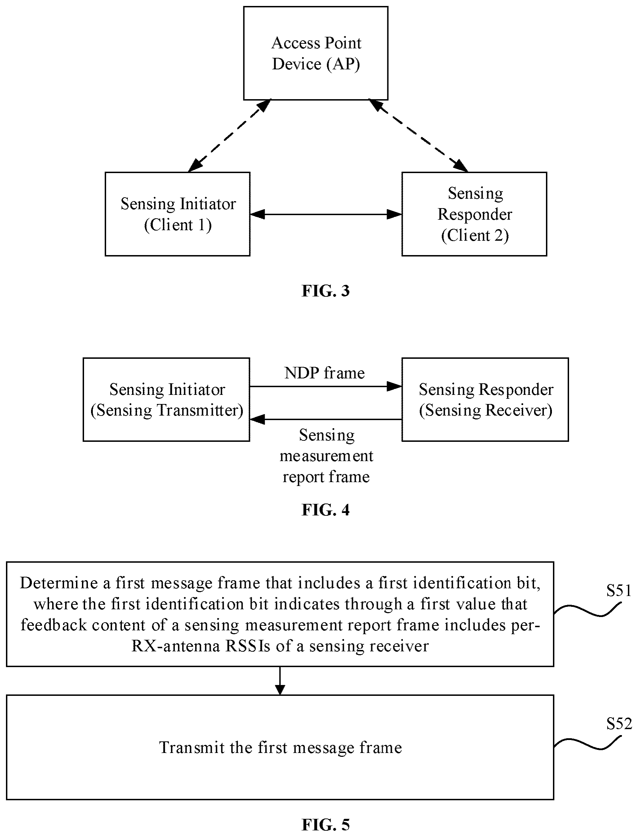

As another architecture, as illustrated in FIG. 3, the sensing initiator and the sensing responder may both be clients, and the two may communicate by connecting to the same AP. In FIG. 3, Client 1 is the sensing initiator, and Client 2 is the sensing responder.

Particularly, the client may include, but is not limited to, a cellular phone, a smart phone, a wearable device, a computer, a personal digital assistant (PDA), a personal communication system (PCS) device, a personal information manager (PIM), a personal navigation device (PND), a global positioning system, a multimedia device, an Internet of Things (IoT) device, etc.

Particularly, the AP may be the wireless switch applied in the wireless network, or the AP may be the access device for the wireless network. The AP may include software applications and/or circuits to enable other types of nodes in the wireless network to communicate externally and internally to the wireless network through the AP. For example, the AP may be a terminal device or a network device equipped with a Wi-Fi chip.

As an illustrative example, a WLAN sensing procedure may include a WLAN sensing session setup, a WLAN sensing measurement setup, and a WLAN sensing measurement termination. In the WLAN sensing session setup, the sensing initiator (e.g., the AP) may initiate a WLAN sensing session, the sensing responder (e.g., the STA) may respond thereto, and operating parameters associated with the sensing session may be determined and exchanged between the devices. One WLAN sensing session setup may include one or more WLAN sensing measurement setups. That is, one or more sensing measurements may be established between the sensing initiator (e.g., the AP) and the sensing responder (e.g., the STA). For example, each WLAN sensing measurement may be identified by a corresponding measurement setup identifier (MSID) or by the MSID containing a plurality of sensing instance IDs. The WLAN sensing measurement corresponding to each measurement setup identifier (ID) may include one or more WLAN sensing measurement instances. The sensing measurement may be performed for each WLAN sensing measurement instance.

A sensing measurement procedure may involve a plurality of roles, such as the sensing initiator, the sensing responder, a sensing transmitter, and a sensing receiver. Particularly, for one sensing procedure, the sensing initiator initiates the sensing measurement procedure, the sensing responder participates in the sensing measurement procedure initiated by the sensing initiator, the sensing transmitter transmits a null data packet (NDP) frame, and the sensing receiver may use the received NDP frame to perform the sensing measurement and feed a sensing measurement result back to the sensing initiator. It can be seen that the functions of the plurality of roles do not conflict with each other. In other words, for the devices in the sensing measurement procedure, one device may play one or more roles. For example, the sensing initiator, the sensing responder, the sensing transmitter, and the sensing receiver may be the same device, or may be two different devices.

In an example referring to FIG. 4, the sensing initiator may be taken as the sensing transmitter, and any sensing responder may be taken as the sensing receiver. The sensing initiator initiates the sensing measurement procedure to the sensing responder, and transmits, as the sensing transmitter, the NDP frame to the sensing receiver. The sensing responder, as the sensing receiver, performs a sensing measurement using the received NDP frame and feeds a sensing measurement result back to the sensing initiator, i.e., transmitting a sensing measurement report frame.

The examples of the present invention provide a communication method, which may be applied to a sensing initiator. Specifically, it may refer to FIG. 5. FIG. 5 is a schematic flowchart of a communication method provided in an example of the present invention.

Optionally, the method may include the following steps.

At step S51, a first message frame that includes a first identification bit is determined, where the first identification bit indicates through a first value that feedback content of a sensing measurement report frame includes per-RX-antenna RSSIs of a sensing receiver.

Particularly, the sensing measurement report frame includes a sensing measurement result of a sensing measurement established by the sensing initiator.

The RSSI of each RX antenna of the sensing receiver may be represented by an independent indication value.

At step S52, the first message frame is transmitted.

Particularly, the sensing initiator may transmit the first message frame during establishing the sensing measurement with a sensing responder. The first message frame may be any message frame transmitted by the sensing initiator to the sensing responder during establishing the sensing measurement with the sensing responder.

In an example, the first message frame may be a sensing measurement setup request frame. The sensing initiator transmits the sensing measurement setup request frame to the sensing responder. The sensing measurement setup request frame includes the first identification bit. When the identification value of the first identification bit is the first value, it indicates that the feedback content of the sensing measurement report frame includes the per-RX-antenna RSSIs of the sensing receiver.

In the communication method applied to the sensing initiator provided in one or more examples of the present invention, while the first identification bit indicates through the first value that the feedback content of the sensing measurement report frame includes the per-RX-antenna RSSIs of the sensing receiver, the first identification bit indicates through a second value that the feedback content of the sensing measurement report frame does not include the RSSIs.

That is, the first message frame may indicate through the first identification bit whether the feedback content of the sensing measurement report frame includes the per-RX-antenna RSSIs of the sensing receiver.

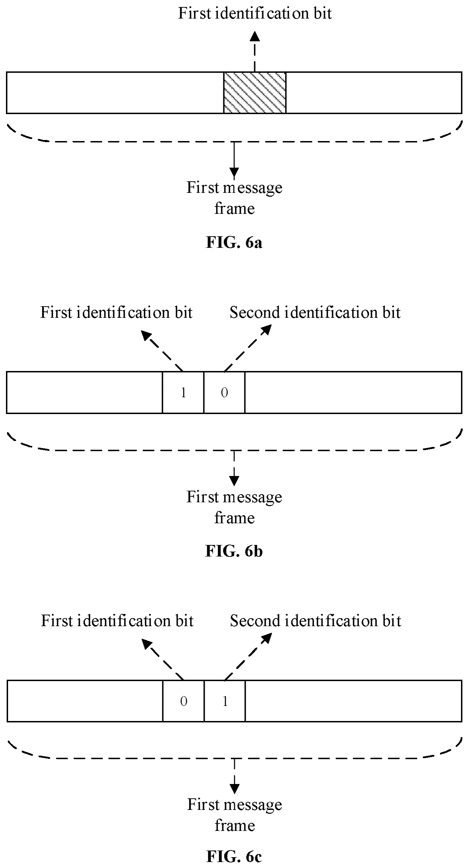

In an example, as illustrated in FIG. 6a, the first message frame includes the first identification bit. When the identification value of the first identification bit is the first value, the first message frame may indicate through the first identification bit that the feedback content of the sensing measurement report frame includes or does not include the per-RX-antenna RSSIs of the sensing receiver.

If the first value is 1 and the second value is 0, it indicates that the feedback content of the sensing measurement report frame includes the per-RX-antenna RSSIs of the sensing receiver when the identification value of the first identification bit is 1, and indicates that the feedback content of the sensing measurement report frame does not include the per-RX-antenna RSSIs of the sensing receiver when the identification value of the first identification bit is 0.

Optionally, while the first identification bit indicates through the first value that the feedback content of the sensing measurement report frame includes the per-RX-antenna RSSIs of the sensing receiver, the first identification bit indicates through the second value that the feedback content of the sensing measurement report frame includes CSI of the sensing receiver.

The first message frame may indicate through the first identification bit that the feedback content of the sensing measurement report frame includes the per-RX-antenna RSSIs or the CSI of the sensing receiver.

In an example, the first message frame may indicate through the first identification bit that the feedback content of the sensing measurement report frame includes the per-RX-antenna RSSIs of the sensing receiver when the identification value of the first identification bit is the first value, and may indicate through the first identification bit that the feedback content of the sensing measurement report frame includes the CSI of the sensing receiver when the identification value of the first identification bit is the second value.

Particularly, the first value and the second value are different. For example, the first value may be 0 and the second value may be 1, which is not limited here.

In the communication method applied to the sensing initiator provided in one or more example of the present invention, when the first identification bit indicates whether the feedback content of the sensing measurement report frame includes the per-RX-antenna RSSIs of the sensing receiver, the first message frame also includes a second identification bit.

Particularly, when the first identification bit indicates that the feedback content of the sensing measurement report frame includes the per-RX-antenna RSSIs of the sensing receiver, the second identification bit indicates through a third value that the feedback content of the sensing measurement report frame does not include the CSI of the sensing receiver. The first identification bit indicates that the feedback content of the sensing measurement report frame does not include the per-RX-antenna RSSIs of the sensing receiver, and the second identification bit indicates through a fourth value that the feedback content of the sensing measurement report frame includes the CSI of the sensing receiver.

Particularly, the third value and the fourth value are different. For example, the third value may be 1 and the fourth value may be 0, which is not limited here.

That is, the first message frame uses the first identification bit alone to indicate whether the feedback content of the sensing measurement report frame includes the per-RX-antenna RSSIs of the sensing receiver, and uses the second identification bit alone to indicate whether the feedback content of the sensing measurement report frame includes the CSI of the sensing receiver, where the other item is not included when the feedback content of the sensing measurement report frame includes any one of the per-RX-antenna RSSIs or the CSI of the sensing receiver.

In an example, as illustrated in FIG. 6b, the first message frame includes the first identification bit and the second identification bit. When the identification value of the first identification bit is the first value (such as 1), the identification value of the second identification bit is the third value (such as 0). In this case, the first identification bit indicates that the feedback content of the sensing measurement report frame includes the per-RX-antenna RSSIs of the sensing receiver, and the second identification bit indicates that the feedback content of the sensing measurement report frame does not include the CSI of the sensing receiver.

As illustrated in FIG. 6c, the first message frame includes the first identification bit and the second identification bit. When the identification value of the first identification bit is the second value (such as 0), the identification value of the second identification bit is the fourth value (such as 1). In this case, the first identification bit indicates that the feedback content of the sensing measurement report frame does not include the per-RX-antenna RSSIs of the sensing receiver, and the second identification bit indicates that the feedback content of the sensing measurement report frame includes the CSI of the sensing receiver.

In the communication method applied to the sensing initiator provided in one or more examples of the present invention, the first message frame also includes a sensing receiver field. The sensing receiver field indicates through a fifth value that the sensing responder is the sensing receiver. In other words, it indicates that the sensing responder transmits the sensing measurement report frame as the sensing receiver.

Particularly, the fifth value may be 1, which is not limited here.

Optionally, the first message frame includes a sensing measurement parameters element field, and the sensing measurement parameters element field includes a sensing measurement parameters field that includes the sensing receiver field.

In an example, the format of the sensing measurement parameters element field may be:

| | Element ID | Length | Element ID Extension | Sensing Measurement Parameters | Sensing subelements |
|---|---|---|---|---|---|
| Octets | 1 | 1 | 1 | 5 | Variable |

Particularly, the Element ID refers to an element ID field, the Length refers to an element length field, the Element ID Extension refers to an element ID extension field, the Sensing Measurement Parameters refers to the sensing measurement parameters field, and the Sensing subelements refer to a sensing subelements field.

Particularly, the sensing measurement parameters field includes a plurality of sub information fields, which includes the sensing receiver field.

In an example, a part of the format of the sensing measurement parameters field may be shown as follows, where the sensing measurement parameters field includes the sensing receiver field.

| | Sensing transmitter | Sensing receiver | Sensing Measurement Report requested | Measurement Setup expiry exponent | BW |
|---|---|---|---|---|---|
| Octets | 1 | 1 | 1 | 4 | 3 |

In the communication method applied to the sensing initiator provided in one or more examples of the present invention, the first message frame also includes a sensing measurement report requested field. The sensing measurement report requested field indicates the sensing responder through a sixth value to transmit the sensing measurement report frame. In other words, it indicates that the sensing initiator requests the sensing measurement report frame to be transmitted to it.

Particularly, the sixth value may be 1, which is not limited here.

Optionally, the first message frame includes the sensing measurement parameters element field, and the sensing measurement parameters element field includes the sensing measurement parameters field that includes the sensing measurement report requested field.

In the communication method applied to the sensing initiator provided in one or more examples of the present invention, the first message frame includes the sensing measurement parameters element field, and the sensing measurement parameters element field includes the sensing measurement parameters field that includes at least one of the first identification bit or the second identification bit.

In an example, when the first message frame indicates through the first identification bit that the feedback content of the sensing measurement report frame includes the per-RX-antenna RSSIs or the CSI of the sensing receiver, the first message frame includes the sensing measurement parameters element field, and the sensing measurement parameters field in the sensing measurement parameters element field includes the first identification bit.

In an example, when the first message frame jointly indicates through the first identification bit and the second identification bit that the feedback content of the sensing measurement report frame includes the per-RX-antenna RSSIs or the CSI of the sensing receiver, the first message frame includes the sensing measurement parameters element field, and the sensing measurement parameters field in the sensing measurement parameters element field includes the first identification bit and the second identification bit.

Particularly, the first identification bit and the second identification bit are different identification bits.

Optionally, the first identification bit and the second identification bit may be reserved bits of the sensing measurement parameters field.

In an example, a part of the format of the sensing measurement parameters field may be shown as follows, where the sensing measurement parameters field includes the reserved bits, and different bits among the reserved bits may be taken as the first identification bit and the second identification bit, respectively.

| | TX repetition | RX repetition | Tx STS | Rx STS | reserved | BSS Color information |
|---|---|---|---|---|---|---|
| Octets | 3 | 3 | 3 | 3 | 7 | 8 |

In the communication method applied to the sensing initiator provided in one or more examples of the present invention, in a case that the sensing initiator and the sensing responder establish a TB sensing measurement, when the first message frame indicates through the first identification bit or the second identification bit that the feedback content of the sensing measurement report frame includes the CSI of the sensing receiver, the first message frame also includes a CSI variation threshold. The CSI variation threshold indicates that the CSI included in the feedback content of the sensing measurement report frame is greater than the CSI variation threshold.

In an example, when the first message frame indicates through the first identification bit that the feedback content of the sensing measurement report frame does not include the per-RX-antenna RSSIs of the sensing receiver, and indicates through the second identification bit that the feedback content of the sensing measurement report frame includes the CSI of the sensing receiver, the first message frame includes the CSI variation threshold.

In an example, when the first message frame indicates through the first identification bit that the feedback content of the sensing measurement report frame includes the CSI of the sensing receiver, the first message frame includes the CSI variation threshold.

In the communication method applied to the sensing initiator provided in one or more examples of the present invention, when the first message frame indicates that the feedback content of the sensing measurement report frame includes the CSI of the sensing receiver, the first message frame includes a sensing subelements field, and any independent information field in the sensing subelements field may be taken as the CSI variation threshold field indicating the CSI variation threshold.

Optionally, the sensing subelements field includes a TB specific subelement field. The TB specific subelement field includes the CSI variation threshold field for indicating the CSI variation threshold.

In an example, the format of the TB specific subelement field may be shown as follows, where the TB specific subelement field includes the CSI variation threshold field.

| | Subelement ID | Length | AID/USI D | Poll Assigned | CSI Variation Threshold | Reserved | Availability Window |
|---|---|---|---|---|---|---|---|
| Bits | 8 | 8 | 16 | 1 | 4 | 3 | 64 |

The communication method applied to the sensing initiator provided in one or more examples of the present invention also includes: receiving the sensing measurement report frame.

Particularly, the sensing measurement report frame includes a third identification bit. The third identification bit indicates through a seventh value that the feedback content of the sensing measurement report frame includes the per-RX-antenna RSSIs of the sensing receiver, and indicates through an eighth value that the feedback content of the sensing measurement report frame includes the CSI of the sensing receiver.

Particularly, the seventh value and the eighth value are different values. For example, the seventh value is 0 and the eighth value is 1.

Optionally, the sensing measurement also includes a fourth identification bit. In this case, the third identification bit indicates through the seventh value that the feedback content of the sensing measurement report frame includes the per-RX-antenna RSSIs of the sensing receiver, and indicates through the eighth value that the feedback content of the sensing measurement report frame does not include the per-RX-antenna RSSIs of the sensing receiver, while the fourth identification bit indicates through a ninth value that the feedback content of the sensing measurement report frame includes the per-RX-antenna RSSIs of the sensing receiver, and indicates through a tenth value that the feedback content of the sensing measurement report frame does not include the CSI of the sensing receiver.

Particularly, the ninth value and the tenth value are different. For example, the ninth value may be 1 and the tenth value may be 0, which is not limited here.

That is, the sensing measurement report frame uses the third identification bit alone to indicate whether the feedback content of the sensing measurement report frame includes the per-RX-antenna RSSIs of the sensing receiver, and uses the fourth identification bit alone to indicate whether the feedback content of the sensing measurement report frame includes the CSI of the sensing receiver, where the other item is not included when the feedback content of the sensing measurement report frame includes any one of the per-RX-antenna RSSIs or the CSI of the sensing receiver.

In an example, the sensing measurement report frame includes the third identification bit and the fourth identification bit. When the identification value of the third identification bit is the seventh value, the identification value of the fourth identification bit is the tenth value. In this case, the third identification bit indicates that the feedback content of the sensing measurement report frame includes the per-RX-antenna RSSIs of the sensing receiver, and the second identification bit indicates that the feedback content of the sensing measurement report frame does not include the CSI of the sensing receiver. When the identification value of the third identification bit is the eighth value, the identification value of the second identification bit is the ninth value. In this case, the third identification bit indicates that the feedback content of the sensing measurement report frame does not include the per-RX-antenna RSSIs of the sensing receiver, and the fourth identification bit indicates that the feedback content of the sensing measurement report frame includes the CSI of the sensing receiver.

In the communication method applied to the sensing initiator provided in one or more examples of the present invention, the sensing measurement report frame includes a sensing measurement report container field that includes at least one of the third identification bit or the fourth identification bit.

Optionally, the sensing measurement report container field includes a segmentation control field that includes at least one of the third identification bit or the fourth identification bit.

In an example, when the sensing measurement report frame indicates through the third identification bit that the feedback content of the sensing measurement report frame includes the per-RX-antenna RSSIs or the CSI of the sensing receiver, the sensing measurement report frame includes the sensing measurement report container field, and the segmentation control field in the sensing measurement report container field includes the third identification bit.

In an example, when the sensing measurement report frame jointly indicates through the third identification bit and the fourth identification bit that the feedback content of the sensing measurement report frame includes the per-RX-antenna RSSIs or the CSI of the sensing receiver, the sensing measurement report frame includes the sensing measurement report container field, and the segmentation control field in the sensing measurement report container field includes the third identification bit and the fourth identification bit.

Optionally, the third identification bit and the fourth identification bit may be reserved bits in the segmentation control field.

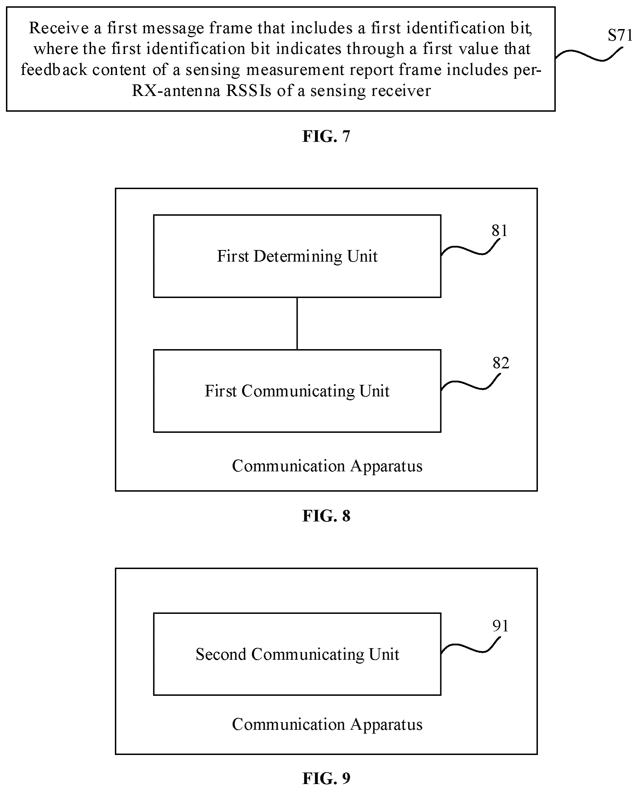

The examples of the present invention provide a communication method, which may be applied to a sensing responder. Specifically, it may refer to FIG. 7. FIG. 7 is another schematic flowchart of a communication method provided in an example of the present invention.

Optionally, the method may include the following steps.

At step S71, a first message frame that includes a first identification bit is received, where the first identification bit indicates through a first value that feedback content of a sensing measurement report frame includes per-RX-antenna RSSIs of a sensing receiver.

Particularly, when an identification value of the first identification bit is the first value, the first identification bit may specifically indicate that the feedback content of the sensing measurement report frame includes the per-RX-antenna RSSIs of the sensing receiver.

Particularly, the sensing measurement report frame includes a sensing measurement result of a sensing measurement established by a sensing initiator.

Particularly, the sensing responder may receive the first message frame during establishing the sensing measurement with the sensing initiator. The first message frame may be any message frame received by the sensing responder from the sensing initiator during establishing the sensing measurement with the sensing initiator.

In an example, the first message frame may be a sensing measurement setup request frame. The sensing responder receives the sensing measurement setup request frame from the sensing initiator. The sensing measurement setup request frame includes the first identification bit. When the identification value of the first identification bit is the first value, it indicates that the feedback content of the sensing measurement report frame includes the per-RX-antenna RSSIs of the sensing receiver.

In the communication method applied to the sensing responder provided in one or more examples of the present invention, while the first identification bit indicates through the first value that the feedback content of the sensing measurement report frame includes the per-RX-antenna RSSIs of the sensing receiver, the first identification bit indicates through a second value that the feedback content of the sensing measurement report frame does not include the RSSIs.

That is, the first message frame may indicate through the first identification bit whether the feedback content of the sensing measurement report frame includes the per-RX-antenna RSSIs of the sensing receiver.

In an example, when the identification value of the first identification bit is the first value, the first message frame may indicate through the first identification bit that the feedback content of the sensing measurement report frame includes or does not include the per-RX-antenna RSSIs of the sensing receiver.

Optionally, while the first identification bit indicates through the first value that the feedback content of the sensing measurement report frame includes the per-RX-antenna RSSIs of the sensing receiver, the first identification bit indicates through the second value that the feedback content of the sensing measurement report frame includes CSI of the sensing receiver.

The first message frame may indicate through the first identification bit that the feedback content of the sensing measurement report frame includes the per-RX-antenna RSSIs or the CSI of the sensing receiver.

In an example, the first message frame may indicate through the first identification bit that the feedback content of the sensing measurement report frame includes the per-RX-antenna RSSIs of the sensing receiver when the identification value of the first identification bit is the first value, and may indicate through the first identification bit that the feedback content of the sensing measurement report frame includes the CSI of the sensing receiver when the identification value of the first identification bit is the second value.

Particularly, the first value and the second value are different. For example, the first value may be 0 and the second value may be 1, which is not limited here.

In the communication method applied to the sensing responder provided in one or more example of the present invention, when the first identification bit indicates whether the feedback content of the sensing measurement report frame includes the per-RX-antenna RSSIs of the sensing receiver, the first message frame also includes a second identification bit.

Particularly, when the first identification bit indicates that the feedback content of the sensing measurement report frame includes the per-RX-antenna RSSIs of the sensing receiver, the second identification bit indicates through a third value that the feedback content of the sensing measurement report frame does not include the CSI of the sensing receiver. The first identification bit indicates that the feedback content of the sensing measurement report frame does not include the per-RX-antenna RSSIs of the sensing receiver, and the second identification bit indicates through a fourth value that the feedback content of the sensing measurement report frame includes the CSI of the sensing receiver.

Particularly, the third value and the fourth value are different. For example, the third value may be 1 and the fourth value may be 0, which is not limited here.

That is, the first message frame uses the first identification bit alone to indicate whether the feedback content of the sensing measurement report frame includes the per-RX-antenna RSSIs of the sensing receiver, and uses the second identification bit alone to indicate whether the feedback content of the sensing measurement report frame includes the CSI of the sensing receiver, where the other item is not included when the feedback content of the sensing measurement report frame includes any one of the per-RX-antenna RSSIs or the CSI of the sensing receiver.

In an example, the first message frame includes the first identification bit and the second identification bit. When the identification value of the first identification bit is the first value, the identification value of the second identification bit is the third value. In this case, the first identification bit indicates that the feedback content of the sensing measurement report frame includes the per-RX-antenna RSSIs of the sensing receiver, and the second identification bit indicates that the feedback content of the sensing measurement report frame does not include the CSI of the sensing receiver. When the identification value of the first identification bit is the second value, the identification value of the second identification bit is the fourth value. In this case, the first identification bit indicates that the feedback content of the sensing measurement report frame does not include the per-RX-antenna RSSIs of the sensing receiver, and the second identification bit indicates that the feedback content of the sensing measurement report frame includes the CSI of the sensing receiver.

In the communication method applied to the sensing responder provided in one or more examples of the present invention, the first message frame also includes a sensing receiver field. The sensing receiver field indicates through a fifth value that the sensing responder is the sensing receiver. In other words, it indicates that the sensing responder transmits the sensing measurement report frame as the sensing receiver.

Particularly, the fifth value may be 1, which is not limited here.

Optionally, the first message frame includes a sensing measurement parameters element field, and the sensing measurement parameters element field includes a sensing measurement parameters field that includes the sensing receiver field.

In an example, the format of the sensing measurement parameters element field may be:

| | Element ID | Length | Element ID Extension | Sensing Measurement Parameters | Sensing subelements |
|---|---|---|---|---|---|
| Octets | 1 | 1 | 1 | 5 | Variable |

Particularly, the Element ID refers to an element ID field, the Length refers to an element length field, the Element ID Extension refers to an element ID extension field, the Sensing Measurement Parameters refers to the sensing measurement parameters field, and the Sensing subelements refer to a sensing subelements field.

Particularly, the sensing measurement parameters field includes a plurality of sub information fields, which includes the sensing receiver field.

In an example, a part of the format of the sensing measurement parameters field may be shown as follows, where the sensing measurement parameters field includes the sensing receiver field.

| | Sensing transmitter | Sensing receiver | Sensing Measurement Report requested | Measurement Setup expiry exponent | BW |
|---|---|---|---|---|---|
| Octets | 1 | 1 | 1 | 4 | 3 |

In the communication method applied to the sensing responder provided in one or more examples of the present invention, the first message frame also includes a sensing measurement report requested field. The sensing measurement report requested field indicates the sensing responder through a sixth value to transmit the sensing measurement report frame. In other words, it indicates that the sensing initiator requests the sensing measurement report frame to be transmitted to it.

Particularly, the sixth value may be 1, which is not limited here.

Optionally, the first message frame includes the sensing measurement parameters element field, and the sensing measurement parameters element field includes the sensing measurement parameters field that includes the sensing measurement report requested field.

In the communication method applied to the sensing responder provided in one or more examples of the present invention, the first message frame includes the sensing measurement parameters element field, and the sensing measurement parameters element field includes the sensing measurement parameters field that includes at least one of the first identification bit or the second identification bit.

In an example, when the first message frame indicates through the first identification bit that the feedback content of the sensing measurement report frame includes the per-RX-antenna RSSIs or the CSI of the sensing receiver, the first message frame includes the sensing measurement parameters element field, and the sensing measurement parameters field in the sensing measurement parameters element field includes the first identification bit.

In an example, when the first message frame jointly indicates through the first identification bit and the second identification bit that the feedback content of the sensing measurement report frame includes the per-RX-antenna RSSIs or the CSI of the sensing receiver, the first message frame includes the sensing measurement parameters element field, and the sensing measurement parameters field in the sensing measurement parameters element field includes the first identification bit and the second identification bit.

Particularly, the first identification bit and the second identification bit are different identification bits.

Optionally, the first identification bit and the second identification bit may be reserved bits of the sensing measurement parameters field.

In an example, a part of the format of the sensing measurement parameters field may be shown as follows, where the sensing measurement parameters field includes the reserved bits, and different bits in the reserved bits may be taken as the first identification bit and the second identification bit, respectively.

| | TX repetition | RX repetition | Tx STS | Rx STS | reserved | BSS Color information |
|---|---|---|---|---|---|---|
| Octets | 3 | 3 | 3 | 3 | 7 | 8 |

In the communication method applied to the sensing responder provided in one or more examples of the present invention, in a case that the sensing initiator and the sensing responder establish a TB sensing measurement, when the first message frame indicates through the first identification bit or the second identification bit that the feedback content of the sensing measurement report frame includes the CSI of the sensing receiver, the first message frame also includes a CSI variation threshold. The CSI variation threshold indicates that the CSI included in the feedback content of the sensing measurement report frame is greater than the CSI variation threshold.

In an example, when the first message frame indicates through the first identification bit that the feedback content of the sensing measurement report frame does not include the per-RX-antenna RSSIs of the sensing receiver, and indicates through the second identification bit that the feedback content of the sensing measurement report frame includes the CSI of the sensing receiver, the first message frame includes the CSI variation threshold.

In an example, when the first message frame indicates through the first identification bit that the feedback content of the sensing measurement report frame includes the CSI of the sensing receiver, the first message frame includes the CSI variation threshold.

In the communication method applied to the sensing responder provided in one or more examples of the present invention, when the first message frame indicates that the feedback content of the sensing measurement report frame includes the CSI of the sensing receiver, the first message frame includes a sensing subelements field, and any independent information field in the sensing subelements field may be taken as the CSI variation threshold field indicating the CSI variation threshold.

Optionally, the sensing subelements field includes a TB specific subelement field. The TB specific subelement field includes the CSI variation threshold field for indicating the CSI variation threshold.

In an example, the format of the TB specific subelement field may be shown as follows, where the TB specific subelement field includes the CSI variation threshold field.

| | Subelement ID | Length | AID/USI D | Poll Assigned | CSI Variation Threshold | Reserved | Availability Window |
|---|---|---|---|---|---|---|---|
| Bits | 8 | 8 | 16 | 1 | 4 | 3 | 64 |

The communication method applied to the sensing responder provided in one or more examples of the present invention also includes: receiving the sensing measurement report frame.

Particularly, the sensing measurement report frame includes a third identification bit. The third identification bit indicates through a seventh value that the feedback content of the sensing measurement report frame includes the per-RX-antenna RSSIs of the sensing receiver, and indicates through an eighth value that the feedback content of the sensing measurement report frame includes the CSI of the sensing receiver.

Particularly, the seventh value and the eighth value are different values. For example, the seventh value is 0 and the eighth value is 1.

The RSSI of each RX antenna of the sensing receiver may be represented by an independent indication value.

Optionally, the sensing measurement also includes a fourth identification bit. In this case, the third identification bit indicates through the seventh value that the feedback content of the sensing measurement report frame includes the per-RX-antenna RSSIs of the sensing receiver, and indicates through the eighth value that the feedback content of the sensing measurement report frame does not include the per-RX-antenna RSSIs of the sensing receiver, while the fourth identification bit indicates through a ninth value that the feedback content of the sensing measurement report frame includes the per-RX-antenna RSSIs of the sensing receiver, and indicates through a tenth value that the feedback content of the sensing measurement report frame does not include the CSI of the sensing receiver.

Particularly, the ninth value and the tenth value are different. For example, the ninth value may be 1 and the tenth value may be 0, which is not limited here.

That is, the sensing measurement report frame uses the third identification bit alone to indicate whether the feedback content of the sensing measurement report frame includes the per-RX-antenna RSSIs of the sensing receiver, and uses the fourth identification bit alone to indicate whether the feedback content of the sensing measurement report frame includes the CSI of the sensing receiver, where the other item is not included when the feedback content of the sensing measurement report frame includes any one of the per-RX-antenna RSSIs or the CSI of the sensing receiver.

In an example, the sensing measurement report frame includes the third identification bit and the fourth identification bit. When the identification value of the third identification bit is the seventh value, the identification value of the fourth identification bit is the tenth value. In this case, the third identification bit indicates that the feedback content of the sensing measurement report frame includes the per-RX-antenna RSSIs of the sensing receiver, and the second identification bit indicates that the feedback content of the sensing measurement report frame does not include the CSI of the sensing receiver. When the identification value of the third identification bit is the eighth value, the identification value of the second identification bit is the ninth value. In this case, the third identification bit indicates that the feedback content of the sensing measurement report frame does not include the per-RX-antenna RSSIs of the sensing receiver, and the fourth identification bit indicates that the feedback content of the sensing measurement report frame includes the CSI of the sensing receiver.

In the communication method applied to the sensing responder provided in one or more examples of the present invention, the sensing measurement report frame includes a sensing measurement report container field that includes at least one of the third identification bit or the fourth identification bit.

Optionally, the sensing measurement report container field includes a segmentation control field that includes at least one of the third identification bit or the fourth identification bit.

In an example, when the sensing measurement report frame indicates through the third identification bit that the feedback content of the sensing measurement report frame includes the per-RX-antenna RSSIs or the CSI of the sensing receiver, the sensing measurement report frame includes the sensing measurement report container field, and the segmentation control field in the sensing measurement report container field includes the third identification bit.

In an example, when the sensing measurement report frame jointly indicates through the third identification bit and the fourth identification bit that the feedback content of the sensing measurement report frame includes the per-RX-antenna RSSIs or the CSI of the sensing receiver, the sensing measurement report frame includes the sensing measurement report container field, and the segmentation control field in the sensing measurement report container field includes the third identification bit and the fourth identification bit.

Optionally, the third identification bit and the fourth identification bit may be reserved bits in the segmentation control field.

Based on the communication methods provided in the examples of the present invention, the sensing initiator may transmit the first message frame during establishing the sensing measurement with the sensing responder, so as to indicate the sensing responder through the first message frame that the feedback content of the sensing measurement report frame includes the per-RX-antenna RSSIs of the sensing receiver or the CSI of the sensing receiver when transmitting the sensing measurement report frame as the sensing receiver.

As illustrated in FIG. 8, an example of the present invention provides a communication apparatus, including:
a first determining unit 81 that is configured to determine a first message frame that includes a first identification bit. The first identification bit indicates through a first value that feedback content of a sensing measurement report frame includes per-RX-antenna RSSIs of a sensing receiver; and
a first communicating unit 82 that is configured to transmit the first message frame.

Optionally, in the example of the present invention, the first identification bit indicates through a second value that the feedback content does not include the RSSIs or includes CSI of the sensing receiver.

Optionally, in the example of the present invention, when the first identification bit is configured to indicate whether the feedback content includes the RSSIs, the first message frame further includes a second identification bit. When the first identification bit is configured to indicate that the feedback content includes the RSSIs, the second identification bit indicates through a third value that the feedback content does not include the CSI. When the first identification bit is configured to indicate that the feedback content does not include the RSSIs, the second identification bit indicates through a fourth value that the feedback content includes the CSI.

Optionally, in the example of the present invention, the first message frame further includes a sensing receiver field, and the sensing receiver field indicates through a fifth value that a sensing responder is the sensing receiver.

Optionally, in the example of the present invention, the first message frame further includes a sensing measurement report requested field. The sensing measurement report requested field indicates the sensing responder through a sixth value to transmit the sensing measurement report frame.

Optionally, in the example of the present invention, the first message frame includes a sensing measurement parameters element field. A sensing measurement parameters field in the sensing measurement parameters element field includes at least one of the first identification bit or the second identification bit.

Optionally, in the example of the present invention, in a case that a TB sensing measurement is established between a sensing initiator and the sensing responder, the first message frame further includes a CSI variation threshold when the first message frame indicates through the first identification bit or the second identification bit that the feedback content includes the CSI, and the CSI variation threshold indicates that the CSI included in the feedback content is greater than the CSI variation threshold.

Optionally, in the example of the present invention, the first message frame includes a sensing subelements field, and a TB specific subelement field in the sensing subelements field includes the CSI variation threshold.

Optionally, in the example of the present invention, the first communicating unit 81 is further configured to:
receive the sensing measurement report frame, where the sensing measurement report frame includes a third identification bit. The third identification bit indicates through a seventh value that the feedback content of the sensing measurement report frame includes the RSSIs, and indicates through an eighth value that the feedback content of the sensing measurement report frame includes the CSI.

Optionally, in the example of the present invention, the sensing measurement report frame includes a sensing measurement report container field, and a segmentation control field in the sensing measurement report container field includes the third identification bit.

Optionally, in an example of the present invention, the first message frame is a sensing measurement setup request frame.

As illustrated in FIG. 9, an example of the present invention provides a communication apparatus, including:
a second communicating unit 91 that is configured to receive a first message frame that includes a first identification bit, where the first identification bit indicates through a first value that feedback content of a sensing measurement report frame includes per-RX-antenna RSSIs of a sensing receiver

Optionally, in the example of the present invention, the first identification bit indicates through a second value that the feedback content does not include the RSSIs or includes the CSI of the sensing receiver.

Optionally, in the example of the present invention, when the first identification bit is configured to indicate whether the feedback content includes the RSSIs, the first message frame further includes a second identification bit. When the first identification bit is configured to indicate that the feedback content includes the RSSIs, the second identification bit indicates through a third value that the feedback content does not include the CSI. When the first identification bit is configured to indicate that the feedback content does not include the RSSIs, the second identification bit indicates through a fourth value that the feedback content includes the CSI.

Optionally, in the example of the present invention, the first message frame further includes a sensing receiver field, and the sensing receiver field indicates through a fifth value that a sensing responder is the sensing receiver.

Optionally, in the example of the present invention, the first message frame further includes a sensing measurement report requested field, and the sensing measurement report requested field indicates the sensing responder through a sixth value to transmit the sensing measurement report frame.

Optionally, in the example of the present invention, the first message frame includes a sensing measurement parameters element field, and a sensing measurement parameters field in the sensing measurement parameters element field includes at least one of the first identification bit or the second identification bit.

Optionally, in the example of the present invention, in a case that a TB sensing measurement is established between a sensing initiator and the sensing responder, the first message frame further includes a CSI variation threshold when the first message frame indicates through the first identification bit or the second identification bit that the feedback content includes the CSI, and the CSI variation threshold indicates that the CSI included in the feedback content is greater than the CSI variation threshold.

Optionally, in the example of the present invention, the first message frame includes a sensing subelements field, and a TB specific subelement field in the sensing subelements field includes the CSI variation threshold.

Optionally, in the example of the present invention, the second communicating unit 91 is further configured to:
transmit the sensing measurement report frame, where the sensing measurement report frame includes a third identification bit. The third identification bit indicates through a seventh value that the feedback content of the sensing measurement report frame includes the RSSIs, and indicates through an eighth value that the feedback content of the sensing measurement report frame includes the CSI.

Optionally, in the example of the present invention, the sensing measurement report frame includes a sensing measurement report container field, and a segmentation control field in the sensing measurement report container field includes the third identification bit.

Optionally, in an example of the present invention, the first message frame is a sensing measurement setup request frame.

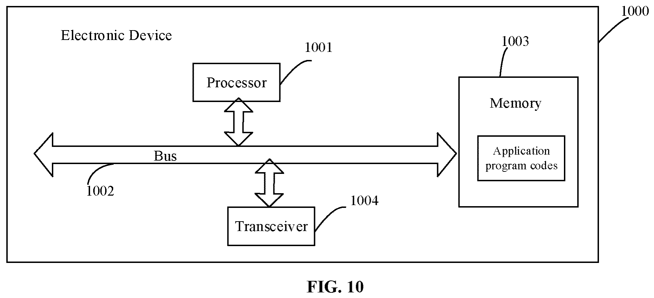

An example of the present invention further provides an electronic device, as illustrated in FIG. 10. The electronic device 1000 illustrated in FIG. 10 includes a processor 1001 and a memory 1003. The processor 1001 and the memory 1003 are connected, for example, via a bus 1002. Optionally, the electronic device 1000 may further include a transceiver 1004. It is to be noted that in actual applications, the number of transceivers 1004 is not limited to one, and the structure of the electronic device 1000 does not constitute a limitation on the examples of the present invention.

The memory 1003 is configured to store application program codes for executing the examples of the present invention, and the execution is controlled by the processor 1001. When the electronic device 1000 acts as a sensing initiator, the processor 1001 is configured to execute the application program codes stored in the memory 1003 to implement the communication methods applicable to the sensing initiator provided in the examples of the present invention. When the electronic device 1000 acts as a sensing responder, the processor 1001 is configured to execute the application program codes stored in the memory 1003 to implement the communication methods applicable to the sensing responder provided in the examples of the present invention.

The bus 1002 may include a channel for transmitting information between the above components. The bus 1002 may be a peripheral component interconnect (PCI) bus or an extended industry standard architecture (EISA) bus, etc. The bus 1002 may be divided into an address bus, a data bus, a control bus, and so on. For ease of representation, only a thick line is illustrated in FIG. 10, but it does not mean that there is only one bus or one type of bus.

The memory 1003 may be a read-only memory (ROM) or other types of static storage devices that can store static information and instructions, a random access memory (RAM) or other types of dynamic storage devices that can store information and instructions, or an electrically erasable programmable read-only memory (EEPROM), a compact disc read-only memory (CD-ROM) or other optical disk storage, an optical disc storage (including a compressed optical disc, a laser disc, an optical disc, a digital versatile disc, a Blu-ray disc, etc.), a magnetic disk storage medium or other magnetic storage devices, or any other medium that can be configured to carry or store the desired program codes in the form of instructions or data structures and can be accessed by a computer, but is not limited to these.

An example of the present invention provides a computer-readable storage medium, on which a computer program is stored. The computer program, when running on a computer, enables the computer to perform the corresponding contents of the foregoing method examples.

Although the steps in the flowcharts of the accompanying drawings are displayed sequentially as indicated by the arrows, it is to be understood that these steps are not necessarily performed sequentially in the order indicated by the arrows. Unless otherwise specified herein, there is no strict order limitation for performing these steps, and these steps may be performed in other orders. In addition, at least part of the steps in the flowcharts of the accompanying drawings may include multiple sub-steps or multiple phases. These sub-steps or phases are not necessarily performed at the same time, but may be performed at different moments. The order of these sub-steps or phases is not necessarily sequential, but may rotate or alternate with at least part of another step, sub-steps, or phases thereof.

It is to be noted that the computer-readable storage medium in the present invention may be a computer-readable signal medium, a computer-readable storage medium, or any combination of the two. The computer-readable storage medium may be, for example but not limited to, an electronic, magnetic, optical, electromagnetic, infrared, or semiconductor system, apparatus, or component, or any combination thereof. More specific examples of the computer-readable storage medium may include, but are not limited to, an electrical connection having one or more conductors, a portable computer disk, a hard disk, an RAM, an ROM, an EPROM or a flash memory, an optical fiber, a portable compact disk-read-only memory (CD-ROM), an optical storage device, a magnetic storage device, or any suitable combination thereof. In the present invention, the computer-readable storage medium may be any tangible medium that contains or stores a program that may be used by or in connection with an instruction execution system, apparatus, or device. In the present invention, a computer-readable signal medium may include data signals propagated in a baseband or as a part of a carrier wave, in which computer-readable program codes are carried. The propagated data signals may take a variety of forms, including but not limited to electromagnetic signals, optical signals, or any suitable combination thereof. The computer-readable signal medium may also be any computer-readable storage medium other than the computer-readable storage medium. The computer-readable signal medium may send, propagate, or transport the program that is used by or in combination with the instruction execution system, apparatus, or device. The program codes contained on the computer-readable storage medium may be transmitted via any appropriate medium, including but not limited to: a wire, an optical cable, radio frequency (RF), etc., or any suitable combination thereof.

The computer-readable storage medium may be included in the sensing initiator or the sensing responder, or may exist independently without being installed in the sensing initiator or the sensing responder.

The computer-readable storage medium carries one or more programs. When the one or more programs are executed by the sensing initiator or the sensing responder, the sensing initiator or the sensing responder is enabled to perform the corresponding communication methods.

According to one aspect of the present invention, a computer program product or a computer program is provided. The computer program product or the computer program includes computer instructions stored in a computer-readable storage medium. One or more processors of the computer device read the computer instructions from the computer-readable storage medium and execute the computer instructions, so that the computer device performs the communication methods provided in the various optional implementations.

Computer program codes for performing operations of the present invention may be written in one or more programming languages, or a combination thereof, including object-oriented programming languages such as Java, Smalltalk, C++, and conventional procedural programming languages such as "C" or similar programming languages. The program codes may be executed entirely on a user computer, partly on the user computer, as a stand-alone software package, partly on the user computer and partly on a remote computer, or entirely on the remote computer or server. In a case involving the remote computer, the remote computer may be connected to the user computer through any type of network, including a local area network (LAN) or a wide area network (WAN), or may be connected to an external computer, for example, through the Internet by an Internet service provider.

The flowcharts and block diagrams in the accompanying drawings illustrate possible implementation architectures, functions, and operations of the systems, the methods, and the computer program products according to various examples of the present invention. In this regard, each block in the flowchart or block diagram may represent a module, a program segment, or a portion of code, which contains one or more executable instructions for implementing the specified logical functions. It is also to be noted that, in some alternative implementations, the functions pointed by the blocks may occur out of the order pointed by the accompanying drawings. For example, two blocks shown in succession may actually be executed substantially in parallel, or may sometimes be executed in a reverse order, depending on the involved functions. It is also to be noted that each block in the block diagram and/or flowchart, and combinations of blocks in the block diagram and/or flowchart, may be implemented by a dedicated hardware-based system that performs a specified function or operation, or may be implemented by a combination of dedicated hardware and computer instructions.

The modules involved in the described examples of the present invention may be implemented by software or by hardware. The name of a module does not, in some cases, constitute a limitation on the module itself. For example, module A may also be described as "module A for performing operation B".

The above description is only an illustration of the preferred examples of the present invention and the technical principles used in the present invention. Those skilled in the art should understand that the scope of invention involved in the present invention is not limited to the technical solutions formed by specific combinations of the above technical features, but should also cover other technical solutions formed by any combination of the above technical features or their equivalent features without departing from the invention concepts, for example, the technical solutions formed by replacing the above features with, but not limited to, the technical features having similar functions disclosed in the present invention.

## Claims

1. A communication method, applied to a sensing initiator, the method comprising:
determining a first message frame that comprises a first identification bit, wherein the first identification bit indicates through a first value that feedback content of a sensing measurement report frame comprises per-receive-antenna, per-RX-antenna, signal strength indications, RSSIs, of a sensing receiver; and
transmitting the first message frame.

2. The method according to claim 1, wherein the first identification bit indicates through a second value that the feedback content comprises no RSSIs or comprises channel state information, CSI, of the sensing receiver.

3. The method according to claim 2, wherein when the first identification bit is configured to indicate whether the feedback content comprises the RSSIs, the first message frame further comprises a second identification bit;
when the first identification bit is configured to indicate that the feedback content comprises the RSSIs, the second identification bit indicates through a third value that the feedback content comprises no CSI, and
when the first identification bit is configured to indicate that the feedback content comprises no RSSIs, the second identification bit indicates through a fourth value that the feedback content comprises the CSI.

4. The method according to claim 1, wherein the first message frame further comprises a sensing receiver field, and the sensing receiver field indicates through a fifth value that a sensing responder is the sensing receiver.

5. The method according to claim 1, wherein the first message frame further comprises a sensing measurement report requested field, and the sensing measurement report requested field indicates a sensing responder through a sixth value to transmit the sensing measurement report frame.

6. The method according to claim 3, wherein the first message frame comprises a sensing measurement parameters element field, and a sensing measurement parameters field in the sensing measurement parameters element field comprises at least one of the first identification bit or the second identification bit.

7. The method according to claim 3, wherein in a case that a trigger-based, TB, sensing measurement is established between the sensing initiator and a sensing responder, the first message frame further comprises a CSI variation threshold when the first message frame indicates through the first identification bit or the second identification bit that the feedback content comprises the CSI, and the CSI variation threshold indicates that the CSI comprised in the feedback content is greater than the CSI variation threshold.

8. The method according to claim 7, wherein the first message frame comprises a sensing subelements field, and a TB specific subelement field in the sensing subelements field comprises the CSI variation threshold.

9. The method according to claim 1, further comprising:
receiving the sensing measurement report frame,
wherein the sensing measurement report frame comprises a third identification bit, and
wherein the third identification bit indicates through a seventh value that the feedback content of the sensing measurement report frame comprises the RSSIs, and indicates through an eighth value that the feedback content of the sensing measurement report frame comprises channel state information, CSI.

10. The method according to claim 9, wherein the sensing measurement report frame comprises a sensing measurement report container field, and a segmentation control field in the sensing measurement report container field comprises the third identification bit.

11. The method according to any one of claims 1 to 10, wherein the first message frame is a sensing measurement setup request frame.

12. A communication method, applied to a sensing responder, the method comprising:
receiving a first message frame that comprises a first identification bit, wherein the first identification bit indicates through a first value that feedback content of a sensing measurement report frame comprises per-receive-antenna, per-RX-antenna, signal strength indications, RSSIs, of a sensing receiver.

13. The method according to claim 12, wherein the first identification bit indicates through a second value that the feedback content comprises no RSSIs or comprises channel state information, CSI, of the sensing receiver.

14. The method according to claim 13, wherein when the first identification bit is configured to indicate whether the feedback content comprises the RSSIs, the first message frame further comprises a second identification bit;
when the first identification bit is configured to indicate that the feedback content comprises the RSSIs, the second identification bit indicates through a third value that the feedback content comprises no CSI, and
when the first identification bit is configured to indicate that the feedback content comprises no RSSIs, the second identification bit indicates through a fourth value that the feedback content comprises the CSI.

15. The method according to claim 12, wherein the first message frame further comprises a sensing receiver field, and the sensing receiver field indicates through a fifth value that the sensing responder is the sensing receiver.

16. The method according to claim 12, wherein the first message frame further comprises a sensing measurement report requested field, and the sensing measurement report requested field indicates the sensing responder through a sixth value to transmit the sensing measurement report frame.

17. The method according to claim 14, wherein the first message frame comprises a sensing measurement parameters element field, and a sensing measurement parameters field in the sensing measurement parameters element field comprises at least one of the first identification bit or the second identification bit.

18. The method according to claim 14, wherein in a case that a trigger-based, TB, sensing measurement is established between a sensing initiator and the sensing responder, the first message frame further comprises a CSI variation threshold when the first message frame indicates through the first identification bit or the second identification bit that the feedback content comprises the CSI, and the CSI variation threshold indicates that the CSI comprised in the feedback content is greater than the CSI variation threshold.

19. The method according to claim 18, wherein the first message frame comprises a sensing subelements field, and a TB specific subelement field in the sensing subelements field comprises the CSI variation threshold.

20. The method according to claim 12, further comprising:
transmitting the sensing measurement report frame,
wherein the sensing measurement report frame comprises a third identification bit, and
wherein the third identification bit indicates through a seventh value that the feedback content of the sensing measurement report frame comprises the RSSIs, and indicates through an eighth value that the feedback content of the sensing measurement report frame comprises channel state information, CSI.

21. The method according to claim 20, wherein the sensing measurement report frame comprises a sensing measurement report container field, and a segmentation control field in the sensing measurement report container field comprises the third identification bit.

22. The method according to any one of claims 12 to 21, wherein the first message frame is a sensing measurement setup request frame.

23. A communication apparatus, comprising:
a first determining unit, configured to determine a first message frame that comprises a first identification bit, wherein the first identification bit indicates through a first value that feedback content of a sensing measurement report frame comprises per-receive-antenna, per-RX-antenna, signal strength indications, RSSIs, of a sensing receiver; and
a first communicating unit, configured to transmit the first message frame.

24. A communication apparatus, comprising:
a second communicating unit, configured to receive a first message frame that comprises a first identification bit, wherein the first identification bit indicates through a first value that feedback content of a sensing measurement report frame comprises per-receive-antenna, per-RX-antenna, signal strength indications, RSSIs, of a sensing receiver.

25. An electronic device, comprising:
one or more memories,
one or more processors, and
a computer program stored in the one or more memories and executable on the one or more processors,
wherein the one or more processors execute the program to implement the method according to any one of claims 1 to 22.

26. A computer-readable storage medium storing a computer program, wherein the computer program, when executed by one or more processors, implements the method according to any one of claims 1 to 22.
